# EUROPEAN PATENT APPLICATION

(11) **EP 2 778 072 A1**
(43) Date of publication of application: **17.09.2014**
(21) Application number: 13275059.7
(22) Date of filing: 14.03.2013
(51) Int. Cl.: B64D 45/02

(54) **Lightning protection system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A lightning protection system for a vehicle (2) (e.g. a low-observable aircraft), the vehicle (2) comprising a vehicle part (4), the vehicle part (4) comprising a relatively electrically conductive core (6) and a relatively non-electrically conductive outer skin (8), the outer skin (8) surrounding, at least to some extent, the core (6) such that the core (6) is not visible from outside the vehicle (2), the lightning protection system comprising: one or more relatively electrically conductive members (10); wherein each of the one or more members (10) is electrically connected to the core (6); and a portion of each of the one or more members (10) is exposed at an outer surface of the external skin (8).

## Description

### FIELD OF THE INVENTION

The present invention relates to lightning protection systems for vehicles.

### BACKGROUND

Many stealth vehicles, e.g. stealth aircraft, are designed so as to avoid being effectively detected or tracked by radar systems.

Passive low observable (LO) features may be used on a stealth vehicle to make it difficult for conventional radar to detect or track the vehicle effectively. For example, vehicle structures may be made of, or coated with a radar-absorbent material (RAM).

Radar-absorbent material is a class of materials that absorbs, to some extent, incident radar signals, thereby reducing the amount of radiation reflected. Radar-absorbent material tends to be relatively non-electrically conductive.

In a separate field, many aircraft are protected from the effects of lightning strikes by having an electrically conductive outer skin (e.g. an aluminium skin). Such a skin allows current to flow through the skin from the point of lightning impact, to some other point on the aircraft, without interruption or diversion to e.g. the interior of the aircraft or electronic aircraft systems.

### SUMMARY OF THE INVENTION

In a first aspect, the present invention provides a lightning protection system for a vehicle, the vehicle comprising a vehicle part, the vehicle part comprising a relatively electrically conductive core and a relatively non-electrically conductive outer skin, the outer skin surrounding, at least to some extent, the core such that the core is not visible from outside the vehicle, the lightning protection system comprising one or more relatively electrically conductive members, wherein each of the one or more members is electrically connected to the core, and a portion of each of the one or more members is exposed at an outer surface of the external skin.

One or more of the members may be a member selected from a group of members consisting of an electrically conductive pin, an electrically conductive strip, an electrically conductive mesh, and a braid of electrical conductors.

A member may be a tapered member having a relatively large cross sectional area where that member is electrically connected to the core, and a relatively small cross sectional area where that member is exposed at an outer surface of the external skin.

The tapered member may taper to a point, the point of the tapered member being located at the outer surface of the external skin.

The external skin may be made of a radar-absorbent material.

The vehicle part may be an aircraft part for use on a low observable aircraft (e.g. an aircraft wing).

For a member, a point on the outer surface of the external skin at which that member is exposed may be the point on the outer surface of the external skin that is closest to the point on the core at which that member is electrically connected to the core.

For a member, that member may electrically connect a point on the outer surface of the external skin at which that member is exposed to a point on the core at which that member is electrically connected via the shortest route between those points.

The lightning protection system may comprise a plurality of members. The members may be arranged at irregular intervals over the vehicle part.

In a further aspect, the present invention provides a vehicle part comprising a lightning protection system in accordance with the above aspect.

In a further aspect, the present invention provides a vehicle comprising a vehicle part in accordance with the preceding aspect.

In a further aspect, the present invention provides a fleet of vehicles comprising a plurality of vehicles, each vehicle being a vehicle in accordance with the preceding aspect, wherein a distribution pattern of electrically conductive members within a vehicle of the fleet is different to a distribution pattern of electrically conductive members within each other vehicle of the fleet.

In a further aspect, the present invention provides a method of providing a vehicle part, the method comprising providing a relatively electrically conductive core, providing a relative non-electrically conductive outer skin such that the outer skin surrounds, at least to some extent, the core such that the core is not visible from outside the outer skin, and providing one or more relatively electrically conductive members such that each of the one or more members is electrically connected to the core and a portion of each of the one or more members is exposed at an outer surface of the external skin, thereby providing the vehicle part.

The vehicle part may be an aircraft part (e.g. an aircraft wing) for use on an aircraft.

### BRIEF DESCRIPTION OF THE DRAWINGS

Figure 1 is a schematic illustration (not to scale) of a top view of an example aircraft;
Figure 2 is a schematic illustration (not to scale) showing a perspective view of the structure of an aircraft wing; and
Figure 3 is a schematic illustration (not to scale) depicting a scenario in which the aircraft wing is struck by lightning.

### DETAILED DESCRIPTION

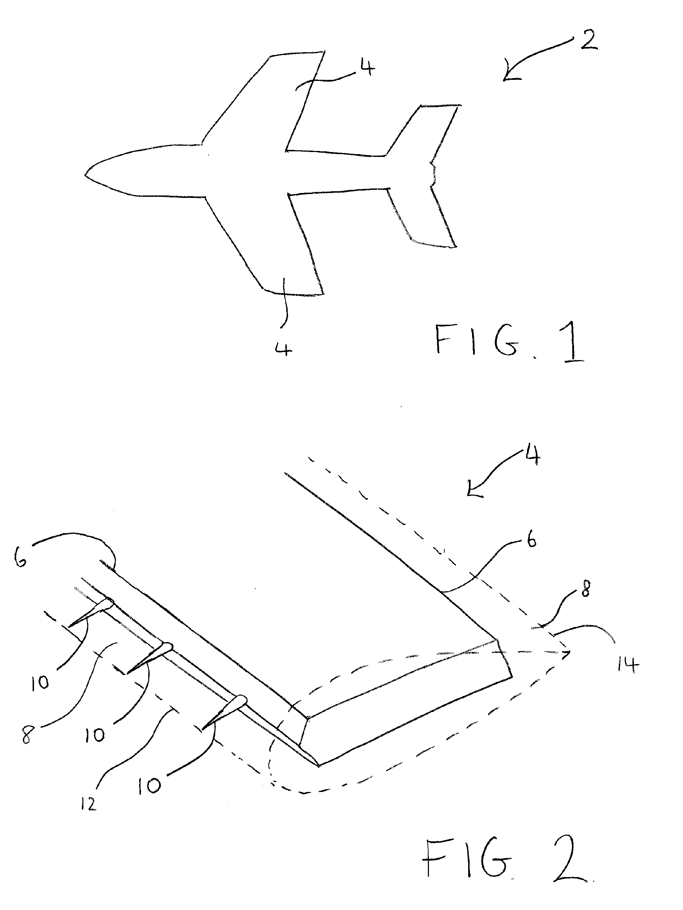

Figure 1 is a schematic illustration (not to scale) of a top view of an example aircraft 2 in which an embodiment of an aircraft wing 4 is implemented.

In this embodiment, the aircraft 2 is a manned aircraft. However, in other embodiments, the aircraft 2 is an unmanned or autonomous aircraft.

In this embodiment, the aircraft 2 has two wings 4. However, in other embodiments, the aircraft 2 comprises a different number of wings 4.

In this is embodiment, the aircraft 2 is a Low Observable aircraft, i.e. an aircraft that is relatively difficult to detect using radar systems.

Figure 2 is a schematic illustration (not to scale) showing a perspective view of the structure of an aircraft wing 4. In this embodiment, both wings 4 of the aircraft 2 have the structure shown in Figure 2 and described in more detail later below.

In this embodiment, an aircraft wing 4 comprises an internal core or frame 6, an external skin 8, and a plurality of protrusions or pins 10.

The frame 6 of the aircraft wing 4 (indicated in Figure 2 by solid lines) is made of an electrically conductive material such as a metal (e.g. aluminium) or a carbon fibre composite.

The external skin 8 of the aircraft wing 4 (indicated in Figure 2 by dotted lines) is formed around, i.e. encases, the frame 6 so as to produce an aircraft wing 4 having an aerofoil-shaped cross-section. A leading edge of the aerofoil is indicated in Figure 2 by the reference numeral 12. A trailing edge of the aerofoil is indicated in Figure 2 by the reference numeral 14.

In this embodiment, the external skin 8 is made of a radar-absorbent material (RAM) such as a foam absorber. The RAM that forms the external skin 8 of the aircraft wing 4 is less electrically conductive than the material that forms the frame 6.

In other embodiments, the external skin 8 of the aircraft wing 4 is made of a different type of material, i.e. instead of RAM. This different material may be relatively electrically non-conductive compared to the frame material. In such embodiments, the external skin may be coated with an outer layer that may be RAM e.g. a radar absorbent paint.

Each of the pins 10 is made of an electrically conductive material. For example, each of the pins may be made out of the same material as the frame 6.

In this embodiment, each of the pins 10 is a cone-shaped pin that tapers from its base to an apex or vertex. In other embodiments, one or more of the pins 10 is a different shape (i.e. a shape other than a cone), e.g. a cylinder, a cuboid, a strip, a mesh etc.

Preferably, each of the pins 10 has a relatively large cross-sectional area at the end of the pin 10 that is in contact with (i.e. connected to) the frame 6, and has a relatively small cross-sectional area at the end of the pin 10 that is at the outer surface of the external skin 8. Preferably, each of the pins 10 tapers from its end that is in contact with the frame 6 to its end that is at the outer surface of the external skin 8.

Each of the pins extends from the frame 6 of the aircraft wing 4 to an outer surface of the external skin 8. In particular, in this embodiment, the base of each of the pins 10 is attached to the frame 6 (in such a way that an electrical current may flow from a pin 10 to the frame 6 and *vice versa,* i.e. such that the electrically conductive pins 10 are electrically in contact with the electrically conductive frame 6), and the vertex of each pin 10 is located at an external or outer surface of the external skin 8. In this embodiment, the vertex of each of the pins 10 is exposed (i.e. is contactable) at the outer surface of the external skin 8.

In this embodiment, each of the pins 10 has a sharp point at the outer surface of the external skin 8.

In this embodiment, the pins 10 are spaced apart from each other and arranged such that the vertices of the pins 10 are located along the leading edge 12 of the wing aerofoil.

Also, in other embodiments, one or more of the pins 10 extend from the frame 6 to the outer surface of the external skin 8 at a different location in the aircraft 4 to that described above and shown in Figure 2. For example, in some embodiments, one or more pins 10 extend from a different point on the frame 6 to that described above and/or extend to a different point on the outer surface of the external skin 8 to that described above (e.g. one or more pins extend to the surface of the external skin 8 at the trailing edge 14).

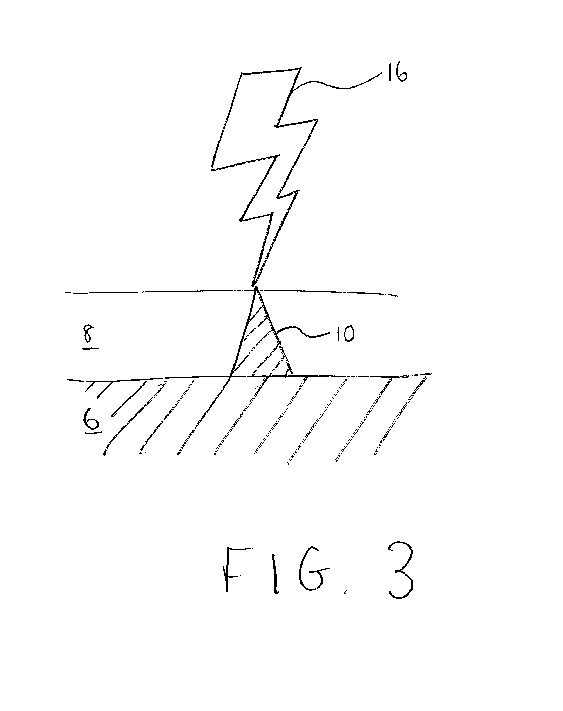

Figure 3 is a schematic illustration (not to scale) depicting a scenario in which the aircraft wing 4 is struck by lightning 16.

Each of the pins 10 has a sharp point (i.e. vertex) at the outer surface of the external skin 8. The sharp points of the pins 10 are in contact with (i.e. point towards) the air surrounding the aircraft wing 4. The shape of a pin 10 tends to promotes very high electric field gradients being at the created at the vertex (i.e. sharp point) of that pin 10. The high electric field gradients created at the pin vertex tend to create a corona discharge that attracts lightning 16.

In other words, in this embodiment, the pins 10, in effect, act as lightning rods that use corona discharge to create conductive paths in the air that point towards the pin 10 and attract lightning 16 towards the pin 10.

Thus, in this embodiment, as shown in Figure 3, when lightning 16 strikes the aircraft wing 4, the lightning tends to strike one or more of the pins 10. The electrically conductive pins 10 advantageously have a higher electrical conductivity (i.e. a lower resistance) than the external skin 8 (i.e. the RAM). Thus, electrical current will flow through the pin 10 struck by the lightning 16, as opposed to through the external skin 8. The electrical current of the lightning strike 16 will travel through the pin 10 struck by the lightning 16 to the frame 6. The current will then travel through the electrically conductive frame 6 of the aircraft wing 4 and through electrically conductive structures of the aircraft 2 connected to the frame 6, and exit from the aircraft 2 at some other location, e.g. at an extremity of the aircraft 2.

Thus, the pins 10 advantageously tend to guide potentially-damaging lightning away from material and structures (e.g. the external skin 8 made of the RAM). Thus, the likelihood of damage to the RAM external skin 8 due to the lightning strike 16 advantageously tends to be reduced.

In particular, for a further aircraft wing having an electrically conductive core or frame and non-electrically conductive RAM external skin surrounding that frame, and no electrically conductive members connecting an outer surface of the external skin and the electrically conductive frame, if that further aircraft wing is struck by lightning, e.g. on the outer surface of its external skin, the external skin will tend to be punctured at least to some extent by the lightning. For example, the lightning may puncture the non-electrically conductive RAM material to contact with the electrically conductive frame beneath. Furthermore, the lightning arc making contact with the electrically conductive frame may produce rapidly expanding gases at or proximate to the point of contact. These rapidly expanding gases may force the RAM external skin of the further aircraft wing away from its frame. Furthermore, a portion of the force with which the RAM external skin is expelled away from the frame may be reflected, e.g. by the RAM external skin, back towards the frame of the further aircraft wing. This reflected force may cause damage to the frame of the further aircraft wing. The electrically conductive pins described above with reference to Figures 1 to 3 advantageously tend to alleviate or eliminate these problems.

The aircraft wing 4 described above with reference to Figures 1 to 3 has an external skin 8 that is made of a RAM. Thus, it tends to be difficult for radar systems to detect the aircraft wing 4. In the above embodiment, only the vertex (i.e. the sharp tip) of each of the pins 10 is exposed (i.e. is contactable/visible) at the outer surface of the external skin 8. Thus, the pins 10 in the aircraft wing tend to have a small (e.g. minimal) radar cross section (i.e. it tends to be difficult for radar systems to detect the pins 10).

Thus, the aircraft wing 4 described above with reference to Figure 1 to 3 advantageously tends to maintain the low observable property of the aircraft (i.e. maintain the level of difficulty experienced when detecting the aircraft 2 using a radar system), whilst offering protection to the aircraft against lightning strikes 16.

Furthermore, for the above mentioned further aircraft wing having an electrically conductive core or frame and non-electrically conductive RAM external skin surrounding that frame and no electrically conductive members connecting an outer surface of the external skin and the electrically conductive frame, if that further aircraft wing is struck by lightning and the RAM skin of the further wing is punctured, or blown away from the frame, the frame of the further aircraft wing may be exposed. This would tend to increase the visibility the further aircraft wing to radar systems. The electrically conductive pins described above with reference to Figures 1 to 3 advantageously tend to alleviate or eliminate this problem.

In some embodiments, portions of the electrically conductive pins that may be relatively good radar reflectors (e.g. the bases of the pins) may be made to be less observable to a radar system e.g. by applying a RAM material to this portion of the pin so as to absorb both incident and reflected radar radiation.

In the above embodiments, the electrically conductive pins are used to electrically connect an electrically conductive aircraft frame with an external surface of the aircraft wing. However, in other embodiments, the electrically conductive pins are used to electrically connect an electrically conductive aircraft frame with an external surface of a different part of the aircraft. Also, in other embodiments, the electrically conductive pins are implemented on a different type of entity, i.e. instead of an aircraft, e.g. a Low Observable ship, or a ground-based vehicle.

In the above embodiments, the electrically conductive pins are used to electrically connect an electrically conductive aircraft frame with an external surface of the aircraft wing. Preferably, the electrically conductive pins connect the frame to the external surface of the aircraft wing via the shortest possible route. Preferably, the particular point on the external surface of the aircraft wing to which a pin connects a particular point on the frame is the point on the external surface of the aircraft wing that is closest to that point on the frame. This advantageously tends to provide that, when struck by lightning, the electrical current is along the shortest possible path from the external surface of the aircraft wing to the frame.

In the above embodiments, the external skin of the aircraft wing is made of RAM. However, in other embodiments, the external skin of the aircraft wing is made of a different type of non-electrically conductive material.

In some embodiments, each electrically conductive pins comprises a braid (e.g. a flat braid) of thin conductors, rather than a single (e.g. cone shaped) conductor. This tends to be preferable due to the "skin effect".

Preferably, the pins are spaced apart from each other at irregular interval. Also, preferably, if implemented on multiple vehicles, the pattern of pins over each vehicle is different. This tends to increase the difficulty of identifying or classifying the vehicle using its radar cross section.

## Claims

1. A lightning protection system for a vehicle (2), the vehicle (2) comprising a vehicle part (4), the vehicle part (4) comprising a relatively electrically conductive core (6) and a relatively non-electrically conductive outer skin (8), the outer skin (8) surrounding, at least to some extent, the core (6) such that the core (6) is not visible from outside the vehicle (2), the lightning protection system comprising:
one or more relatively electrically conductive members (10); wherein
each of the one or more members (10) is electrically connected to the core (6); and
a portion of each of the one or more members (10) is exposed at an outer surface of the external skin (8).

2. A lightning protection system according to claim 1, wherein one or more of the members (10) is a member selected from a group of members consisting of an electrically conductive pin, an electrically conductive strip, an electrically conductive mesh, and a braid of electrical conductors.

3. A lightning protection system according to claim 1 or 2, wherein a member (10) is a tapered member having a relatively large cross sectional area where that member (10) is electrically connected to the core (6), and a relatively small cross sectional area where that member (10) is exposed at an outer surface of the external skin (8).

4. A lightning protection system according to claim 3, wherein the tapered member (10) tapers to a point, the point of the tapered member (10) being located at the outer surface of the external skin (8).

5. A lightning protection system according to any of claims 1 to 4, wherein the external skin (8) is made of a radar-absorbent material.

6. A lightning protection system according to any of claims 1 to 5, wherein the vehicle part (4) is an aircraft part for use on a low observable aircraft.

7. A lightning protection system according to claim 6, wherein the vehicle part (4) is an aircraft wing.

8. A lightning protection system according to any of claims 1 to 7, wherein, for a member (10), a point on the outer surface of the external skin (8) at which that member (10) is exposed is the point on the outer surface of the external skin (8) that is closest to the point on the core (6) at which that member (10) is electrically connected to the core (6).

9. A lightning protection system according to any of claims 1 to 8, wherein, for a member (10), that member (10) electrically connects a first point to a second point via the shortest route between those points, the first point being a point on the outer surface of the external skin (8) at which that member (10) is exposed, the second point being a point on the core (6) at which that member (10) is electrically connected to the core (6).

10. A lightning protection system according to any of claims 1 to 9, wherein the lightning protection system comprises a plurality of members (10) and the members (10) are arranged at irregular intervals over the vehicle part (4).

11. A vehicle part (4) comprising a lightning protection system in accordance with any of claims 1 to 10.

12. A vehicle (2) comprising a vehicle part (4) according to claim 11.

13. A fleet comprising a plurality of vehicles (2), each vehicle (2) being a vehicle (2) in accordance with claim 12, wherein a distribution pattern of electrically conductive members (10) within a vehicle (2) of the fleet is different to a distribution pattern of electrically conductive members within each other vehicle (2) of the fleet.

14. A method of providing a vehicle part (4), the method comprising:
providing a relatively electrically conductive core (6);
surrounding, at least to some extent, with a relative non-electrically conductive outer skin (8), the core (6) such that the core (6) is not visible from outside the outer skin (8); and
electrically connecting one or more relatively electrically conductive members (10) to the core (6), the one or more members (10) being coupled to the core (6) such that a portion of each of the one or more members (10) is exposed at an outer surface of the external skin (8), thereby providing the vehicle part (4).

15. A method according to claim 14, wherein the vehicle part (4) is an aircraft part for use on an aircraft.
